# EUROPÄISCHE PATENTSCHRIFT

(11) **EP 3 009 717 B1**
(45) Veröffentlichungstag und Bekanntmachung des Hinweises auf die Patenterteilung: **08.02.2017**
(21) Anmeldenummer: 15182288.9
(22) Anmeldetag: 25.08.2015
(51) Int. Cl.: F16J 15/34, E21B 21/02

(54) **VORMONTIERTER WECHSELEINSATZ EINER BOHRSPÜLEINRICHTUNG**
PREASSEMBLED EXCHANGEABLE INSERT OF A DRILL CLEANING DEVICE
PIÈCE D'INSERTION PRÉ-MONTÉE D'UN DISPOSITIF DE FLUIDE DE FORAGE

(30) Priorität: 16.10.2014 DE 102014221000
(43) Veröffentlichungstag der Anmeldung: 20.04.2016
(73) Patentinhaber: EagleBurgmann Germany GmbH & Co. KG, 82515 Wolfratshausen (DE)
(72) Erfinder: GLAWION, Michael, 82538 Geretsried (DE); LANG, Klaus, 82547 Beuerberg (DE); HOFMANN, Jens, 82054 Sauerlach (DE); JOHANNES, Rolf, 82515 Wolfratshausen (DE); WANNER, Volkert, 82515 Wolfratshausen (DE)
(74) Vertreter: Hoefer & Partner Patentanwälte mbB

(56) Entgegenhaltungen:
- EP-B1- 1 630 347
- EP-B1- 2 281 135
- WO-A2-2014/075779
- DE-U1-202005 011 137
- US-A- 4 557 489
- US-B2- 7 213 660

## Beschreibung

Die vorliegende Erfindung betrifft einen vormontierten Wechseleinsatz einer Bohrspüleinrichtung zum Verbinden eines stationären, nicht drehenden Spülrohrs mit einem rotierenden Spülrohr, welches in ein Bohrloch eingelassen ist.

Für Bohrungen in der Erdkruste, insbesondere nach Rohstoffen, werden sog. "wash pipe-Anordnungen" verwendet, bei denen ein Bohrkopf am Ende eines rotierenden Rohres angeordnet ist. Durch das Rohr wird von oben eine Spülflüssigkeit nach unten in das Bohrloch geführt, welche dann am Bohrkopf austritt und entlang des Außenumfangs des rotierenden Rohrs wieder zur Erdoberfläche zurückgeführt wird. Ein Problemkreis bei derartigen Bohrlochanordnungen ist eine Abdichtung zwischen einem stationären Spülrohr und dem rotierenden Spülrohr. Um insbesondere aus Umweltgesichtspunkten jegliche Undichtigkeiten an dieser Abdichtung zwischen stationärem und rotierendem Spülrohr zu vermeiden, werden möglichst konservative Lösungen eingesetzt. Eine Lösung zur Abdichtung ist beispielsweise eine Reihenschaltung einer Vielzahl von stationären Dichtungen, beispielsweise Stopfbuchsenpackungen oder Lippenringdichtungen. Bei Ausfall einer dieser stationären Dichtungen sichert dann die nachfolgende stationäre Dichtung ab. Aufgrund der hohen Belastungen beim Bohren ist die Lebensdauer der einzelnen stationären Dichtungen jedoch sehr gering. Hierdurch ist es notwendig, dass die stationären Dichtungen nach einem kurzen Zeitraum ausgetauscht werden müssen. Dies führt jedoch zu einem Stillstand der Bohranlage und somit zu hohen Kosten. Da die stationären Dichtungen einzeln über die Rohrteile gestülpt werden müssen, ist auch der Wechselaufwand sehr hoch. Weiterhin ist aus der EP 1 630 347 B1 eine Abdichtung zwischen einem rotierenden und einem stationären Rohr bekannt, welche eine Gleitringdichtung verwendet. Gleitringdichtungen haben grundsätzlich den Vorteil einer längeren Lebensdauer, solange eine Beschädigung der Gleitflächen vermieden werden kann. Um die Gleitflächen dieser Gleitringdichtung möglichst immer in Anlage zueinander zu halten, ist ein Federelement vorgesehen, welches im Betrieb ständig eine Vorspannung in Axialrichtung auf die Gleitringe aufbringt. Aufgrund der hohen Belastungen beim Bohren muss die Gleitringdichtung jedoch auch nach einer gewissen Zeit gewechselt werden. Hierzu ist dann eine Mutter-Schrauben-Anordnung vorgesehen, mit welcher die Federelemente in Axialrichtung zusammengedrückt werden können, um die Vorspannung auf die Gleitringe zu beenden. Erst dann ist ein Wechsel der Gleitringe möglich. Dieses Wechselverfahren ist aufwendig und zeitintensiv. Weiterhin werden die Gleitringe einzeln entnommen bzw. wieder montiert, so dass die Gefahr besteht, dass während der Montage Beschädigungen an den Gleitflächen auftreten. Hierbei muss insbesondere beachtet werden, dass die Abdichtung zwischen rotierendem und stationärem Spülrohr in einer Glocke eines Bohrturms in mehreren Metern Höhe angeordnet ist und insbesondere externe Einflüsse wie Wetter und Temperatur den Wechselvorgang negativ beeinflussen können, da insbesondere an immer unwirtlicheren Stellen, z.B. auf hoher See und in kalten Regionen der Erde gebohrt wird. Von daher muss der Wechsel trotz möglicherweise äußerst widriger Außenumstände mit größter Vorsicht vorgenommen werden, um Beschädigungen der Gleitflächen zu vermeiden. Dies führt ebenfalls zu einem langen und aufwendigen Wechselprozess.

Ferner ist aus der US 4,557,489 eine Abdichtung mit Gleitringen bekannt, welche druckausgeglichen ist. Hierzu sind entweder in den Gleitringen Bohrungen in Radialrichtung vorgesehen, welche zum äußeren Umfang der Gleitringe für einen Druckausgleich führen oder in Gleitringhalterungen Bohrungen vorgesehen, welche zum äußeren Umfang der Gleitringe führen, um den Druckausgleich bereitzustellen. Bei einer Beschädigung der Dichtung müssen die Gleitringe separat gewechselt werden.

Es ist daher Aufgabe der vorliegenden Erfindung, eine Abdichtung zwischen einem rotierenden und einem stationären Spülrohr bereitzustellen, welche bei einfachem und kostengünstigem Aufbau insbesondere einen schnellen und sicheren Wechsel der Dichtung ermöglicht.

Diese Aufgabe wird durch einen vormontierten Wechseleinsatz mit den Merkmalen des Anspruchs 1 gelöst. Die Unteransprüche zeigen bevorzugte Weiterbildungen der Erfindung.

Der erfindungsgemäße Wechseleinsatz einer Bohrspüleinrichtung zum Verbinden eines stationären Spülrohrs mit einem rotierenden Spülrohr an einem Bohrloch weist demgegenüber den Vorteil auf, dass ein Wechsel schnell und einfach möglich ist. Insbesondere kann erfindungsgemäß vermieden werden, dass während des Wechselvorgangs Beschädigungen der Dichtung auftreten. Die Erfindung ermöglicht es dabei, eine Gleitringdichtung zu verwenden, welche im Vergleich mit dem in Reihe geschalteten Stoffbuchsen eine deutlich längere Lebensdauer aufweist. Hierdurch können Stillstandszeiten während der Bohrvorgänge minimiert werden. Dies wird erfindungsgemäß dadurch erreicht, dass ein vormontierter Wechseleinsatz mit einer Gleitringdichtungsanordnung verwendet wird, welcher in einer Werkstatt vormontiert werden kann und dann als komplette Einheit am Bohrturm ausgetauscht werden kann. Der Wechseleinsatz umfasst erfindungsgemäß neben einem stationären und rotierendem Gleitring zwei Gleitringträger sowie einen Verstellmechanismus mit einer Schraubverbindung, um nach einem Einsetzen des Wechseleinsatzes in die Bohrspüleinrichtung eine Verlängerung der Abmessungen des Wechseleinsatzes in Axialrichtung zu ermöglichen, um einen Anschluss an das stationäre und rotierende Spülrohr zu erreichen. Weiter umfasst der vormontierte Wechseleinsatz ein Anschlussbauteil für einen Anschuss des Wechseleinsatzes an das stationäre Spülrohr. Die Axialverstellung erfolgt dann relativ zwischen dem Anschlussbauteil und den anderen Bauteilen des Wechseleinsatzes. Somit kann eine Änderung (Verlängerung und Verkürzung) einer Axiallänge des Wechseleinsatzes erreicht werden. Bei einer Beschädigung der Dichtung wird zur Demontage der axiale Verstellmechanismus wieder zurückgestellt, so dass sich die Axiallänge des Wechseleinsatzes verkürzt und der Wechseleinsatz aus dem Bereich zwischen dem stationären und rotierenden Spülrohr entnommen werden kann und durch eine neuen vormontierten Wechseleinsatz ausgetauscht werden kann. Der Austausch dauert dabei nur wenige Minuten, so dass die relativ höheren Kosten für den kompletten Wechseleinsatz durch die kurze Austauschzeit mehr als ausgeglichen werden. Ein weiterer Vorteil der Verwendung eines Wechseleinsatzes liegt darin, dass bei jedem neuen Wechseleinsatz immer neue Nebendichtelemente verwendet werden können. Dies kann bei einem Austausch von lediglich den Gleitringen nicht erreicht werden. Auch hierdurch ergibt sich ein reduzierter Wartungsbedarf.

Um einen einfachen Montagevorgang und Demontagevorgang des vormontierten Wechseleinsatzes in der Bohrspüleinrichtung zu ermöglichen, umfasst die Schaubverbindung bevorzugt eine Außenhülse mit einem Innengewinde und eine Innenhülse mit einem Außengewinde. Die Innenhülse ist dabei bevorzugt mit dem Gleitringträger des stationären Gleitrings verbunden. Somit kann durch eine Relativverstellung zwischen der Außenhülse und der Innenhülse über das Gewinde die Axiallänge des vormontierten Wechseleinsatzes geändert werden, so dass ein sicheres Anlegen des Wechseleinsatzes am stationären und rotierenden Spülrohr möglich ist. In gleicher Weise kann eine Demontage durch Verkürzen der Axiallänge des Wechseleinsatzes durch relatives Verdrehen zwischen Außenhülse und Innenhülse erfolgen. Dadurch kann die Montage/Demontage auch bei widrigen Witterungsverhältnissen von einem Monteur problemlos ausgeführt werden.

Zur sicheren rotierenden Mitnahme weist der zweite Gleitringträger wenigstens einen in Axialrichtung vorstehenden Vorsprung für eine Drehmomentübertragung vom rotierenden Spülrohr auf den zweiten Gleitringträger auf.

Weiter bevorzugt ist der zweite Gleitringträger zweiteilig mit einem ersten Trägerteil und einem zweiten Trägerteil ausgebildet, wobei der zweite Trägerteil ein Ausrichtring ist. Der Ausrichtring ist vorgesehen, um den zweiten Gleitringträger in Umfangsrichtung auszurichten. Dies ist notwendig, da eine Rotationskraft vom rotierenden Spülrohr über den zweiten Gleitringträger auf den rotierenden Gleitring übertragen wird.

Bevorzugt ist zwischen dem Gleitringträger des rotierenden Gleitrings und dem rotierenden Spülrohr eine formschlüssige Verbindung vorgesehen, beispielsweise durch am Gleitringträger radial nach außen und/oder axial vorstehende Vorsprünge, welche in entsprechende Ausnehmungen am rotierenden Spülrohr eingreifen. Dadurch kann eine Ausrichtung in Umfangsrichtung schnell und einfach auch bei schwierigsten Bedingungen ermöglicht werden.

Das Anschlussbauteil weist bevorzugt eine Umfangsnut für einen formschlüssigen Eingriff mit dem stationären Spülrohr auf.

Um eine Beschädigung des vormontierten Wechseleinsatzes während der Montage bzw. während des Transports des Wechseleinsatzes zu vermeiden, umfasst der Wechseleinsatz vorzugsweise eine Transportsicherung. Die Transportsicherung umfasst wenigstens ein Federelement, um vor einer Endmontage des Wechseleinsatzes eine Vorspannung auf die Gleitringdichtungsanordnung auszuüben. Die Vorspannung wird dabei auf die Gleitringe derart ausgeübt, dass die Gleitflächen der Gleitringe sicher aneinander anliegen, um Beschädigungen der Gleitflächen zu vermeiden. Die Transportsicherung ist dabei zwischen dem Anschlussbauteil zum stationären Spülrohr und dem ersten Gleitringträger zum Halten des stationären Gleitrings angeordnet. Die Transportsicherung ist ferner derart ausgestaltet, dass im endmontierten Zustand des Wechseleinsatzes im Betrieb keine Vorspannung auf die Gleitringdichtung ausgeübt wird. Dies wird beispielsweise durch Vorsehen von Federelementen bereitgestellt, welche im montierten Zustand des Wechseleinsatzes, in welchem eine Axiallänge des Wechseleinsatzes durch den axialen Verstellmechanismus vergrößert wurde, keine Vorspannung mehr ausüben. Die Federelemente können beispielsweise eine entsprechend kurze Länge aufweisen, so dass im endmontierten, axial verlängerten Zustand des Wechseleinsatzes keine Vorspannung auf die Gleitringe ausgeübt wird. Aufgrund des Eigengewichts des Gleitrings und des Gewichts des ersten Gleitringträgers liegt der stationäre Gleitring trotzdem sicher auf dem rotierenden Gleitring.

Weiter bevorzugt weist der erste Gleitringträger, an welchem der stationäre Gleitring angeordnet ist, an seinem Innenumfang eine Schulter auf. Die Schulter bewirkt, dass das Medium, welches durch den Wechseleinsatz mit Druck hindurchgeführt wird, über die Schulter Druck auf die Gleitringe ausübt, so dass eine sichere Anlage der Gleitflächen der Gleitringe erreicht wird.

Damit der Druck auf die Gleitringe im Betrieb nicht zu stark wird, weist bevorzugt jeweils der rotierende und stationäre Gleitring am inneren Umfang eine Fase auf. Die Fase reicht vorzugsweise von einem inneren Umfang der Gleitringe bis zur Hälfte einer Gleitringbreite. Besonders bevorzugt sind die Fasen an beiden Gleitringen gleich vorgesehen.

Für einen besonders sicheren Betrieb weist vorzugsweise die Innenhülse des Verstellmechanismus an einer Innenseite eine Führungsfläche für den rotierenden Gleitring auf. Die Führungsfläche kann beispielsweise durch Vorsehen eines Freistichs ausgebildet sein, wobei zwischen der Wand des Freistichs und dem rotierenden Gleitring ein kleiner Spalt vorhanden ist, um im Betrieb keine Reibung zwischen rotierendem Gleitring und der Hülse zu haben. Bei kleineren Auslenkungen führt dann die Innenseite der Innenhülse den rotierenden Gleitring wieder in die nicht kontaktierende Normalposition zurück.

Weiter bevorzugt umfasst der Verstellmechanismus des Wechseleinsatzes eine Verdrehsicherung. Die Verdrehsicherung ist vorzugsweise ein Schraubbolzen oder dergleichen. Die Verdrehsicherung stellt dabei sicher, dass eine Relativposition zwischen der Außenhülse und der Innenhülse im Betrieb sicher gehalten wird. Mit anderen Worten wird nach der Verstellung der Axiallänge des Wechseleinsatzes, welche durch Verdrehen zwischen Außenhülse und Innenhülse erfolgt ist, die Position durch die Verdrehsicherung gesichert. Vor der Demontage muss die Verdrehsicherung selbstverständlich gelöst werden, damit wieder eine Verdrehung zwischen Außenhülse und Innenhülse möglich ist, um eine Verkürzung der Axiallänge des Wechseleinsatzes zu ermöglichen.

Die Verdrehsicherung ist besonders bevorzugt ein Schraubbolzen mit einem an der Spitze des Schraubbolzens angeordneten, federvorgespannten Rastelements, insbesondere einer federvorgespannten Kugel. Das Rastelement greift dabei an einer Ausgangsposition, in welcher der Wechseleinsatz noch nicht axial verlängert ist, in eine erste Ausnehmung an der Aussenhülse ein. Dadurch wird eine Grundstellung des vormontierten Wechseleinsatzes definiert. Während der Vormontage kann ein Monteur somit einfach erkennen, wann die vormontierte Position erreicht ist. Ferner ist eine zweite Ausnehmung an der Aussenhülse vorgesehen, in welche das Rastelement einrastet, wenn der Wechseleinsatz während der Montage den axial verlängerten Endzustand, d.h., den Endmontagezustand, erreicht hat. Somit ist ebenfalls ein Indikator für eine richtige Position des Erreichens der Endstellung des Wechseleinsatzes im montierten Zustand vorhanden. Diese Maßnahmen erleichtert die Montage erheblich, welche, wie erwähnt, teilweise unter höchst schwierigen Bedingungen aufgrund äußerer Einflüsse vorgenommen werden muss. Durch das federvorgespannte Rastelement erfolgt das Einrasten bei der Montage und das Ausrasten bei der Demontage automatisch durch den Verdrehvorgang zwischen Außenhülse und Innenhülse der Schraubverbindung.

Die Verdrehsicherung ist bevorzugt an einem mit der Innenhülse verbundenen Arm angeordnet, wobei die Außenhülse zwischen dem Arm und der Innenhülse angeordnet ist. Die Innenhülse weist vorzugsweise eine Länge in Axialrichtung auf, welche größer als eine Länge in Axialrichtung der Außenhülse ist. Die Innenhülse weist ferner bevorzugt einen in Axialrichtung verlängerten Bereich auf, welcher zum Ansetzen eines Werkzeuges zur Verstellung der Schraubverbindung eingerichtet ist.

Weiter bevorzugt weist der rotierende und stationäre Gleitring jeweils eine Bandage auf. Hierdurch können die Gleitringe auch hohen Druckbelastungen standhalten.

Ferner betrifft die vorliegende Erfindung eine Bohrspüleinrichtung mit einem erfindungsgemäßen vormontierten Wechseleinsatz.

Nachfolgend wird ein bevorzugtes Ausführungsbeispiel der Erfindung unter Bezugnahme auf die begleitende Zeichnung im Detail beschrieben. In der Zeichnung ist:
- Fig. 1: eine schematische Darstellung einer Bohrspüleinrichtung, in welcher ein erfindungsgemäßer vormontierter Wechseleinsatz verwendet wird,
- Fig. 2: eine schematische, perspektivische Darstellung eines Wechselvorgangs des Wechseleinsatzes,
- Fig. 3: eine schematische Teilschnittansicht des Wechseleinsatzes während eines ersten Montageschritts, in welchem der Wechseleinsatz in die Bohrspüleinrichtung eingeschoben ist,
- Fig. 4: eine schematische Teilschnittansicht des Wechseleinsatzes, in welcher der Wechseleinsatz mit einem stationären Spülrohr verbunden ist,
- Fig. 5: eine schematische Teilschnittansicht des Wechseleinsatzes während des Vorgangs des Verbindens mit einem rotierenden Spülrohr,
- Fig. 6: eine schematische, perspektivische Ansicht eines Verstellrings zur Ausrichtung des Wechseleinsatzes gegenüber dem rotierenden Spülrohr,
- Fig. 7: eine schematische Teilschnittansicht des Wechseleinsatzes im montierten Zustand, und
- Fig. 8: eine schematische Schnittansicht des Wechseleinsatzes im montierten Zustand, wobei zur besseren Übersichtlichkeit das stationäre und rotierende Spülrohr nicht dargestellt sind.

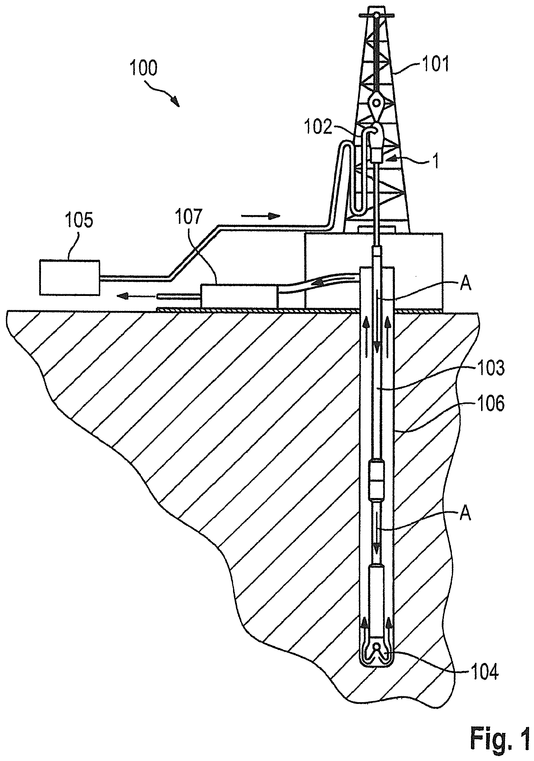

Nachfolgend wird unter Bezugnahme auf die Fig. 1 bis 8 ein Wechseleinsatz 1 gemäß einem bevorzugten Ausführungsbeispiel der Erfindung im Detail beschrieben.

Wie aus Fig. 1 ersichtlich ist, wird der Wechseleinsatz 1 in einer Bohrspüleinrichtung 100 verwendet. Die Bohrspüleinrichtung 100 umfasst ein Bohrturm 101 und ist eingerichtet, ein Spülmedium von oben in ein Bohrloch 106 einzubringen (Pfeil A). Die Bohrspüleirichtung 100 umfasst dabei ein stationäres Spülrohr 102 und ein rotierendes Spülrohr 103, an dessen freiem Ende ein Bohrkopf 104 angeordnet ist. Ein Spülmedium wird dabei mittels einer Pumpe 105 über das stationäre Spülrohr 102 in das rotierende Spülrohr 103 eingeführt und tritt am Bohrkopf 104 aus. Das Spülmedium strömt dann am Außenumfang des rotierenden Spülrohrs 103 wieder zur Oberfläche in eine Trenneinrichtung 107 zurück. In der Trenneinrichtung 107 wird dann aus dem Bohrloch 106 ausgespültes Gestein und dergleichen vom Spülmedium getrennt, welches dann in einem Kreislauf wieder verwendet werden kann.

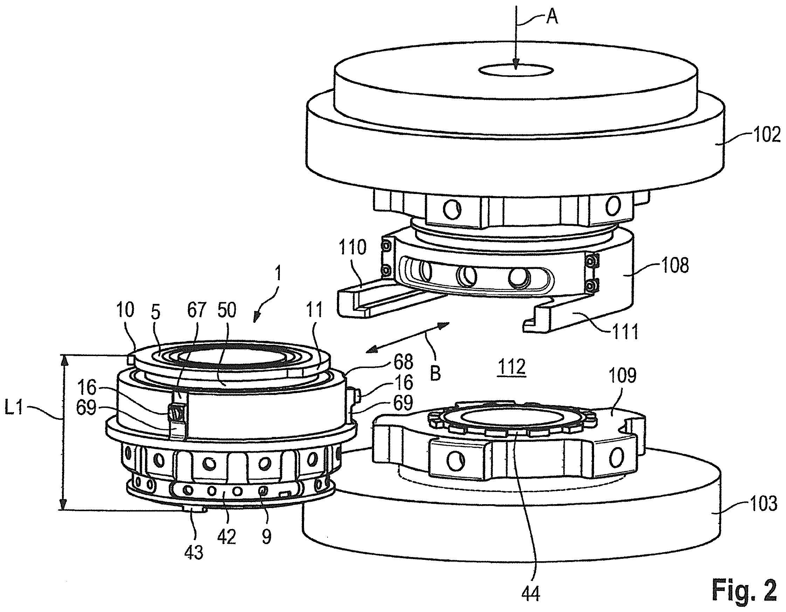

Erfindungsgemäß ist ein vormontierter Wechseleinsatz 1 vorgesehen, welcher komplett gewechselt werden kann. Dies ist in Fig. 2 durch den Doppelpfeil B schematisch angedeutet. Der vormontierte Wechseleinsatz wird dabei in einem Zwischenraum 112 zwischen dem stationären Spülrohr 102 und dem rotierenden Spülrohr 103 montiert. Am freien Ende des stationären Spülrohrs 102 ist dabei ein erster Adapter 108 vorgesehen und am gegenüberliegenden freien Ende des rotierenden Spülrohrs 103 ist ein zweiter Adapter 109 vorgesehen. Am ersten Adapter 108 sind ferner erste und zweite Führungsarme 110, 111 ausgebildet, welche ein leichtes Einführen des vormontierten Wechseleinsatzes 1 ermöglichen. Hierzu sind am Wechseleinsatz 1 an einem Anschlussbauteil 5 zwei Führungselemente 10, 11 vorgesehen. Die Führungselemente 10, 11 liegen dabei mit ihrer Unterseite an den schienenartigen Führungsarmen 110, 111 auf, so dass das Gewicht des Wechseleinsatzes 1 nach erfolgtem Aufschieben auf die Führungsarme 110, 111 von diesen getragen wird und die Montage erleichtert wird. Das Anschlussbauteil 5 umfasst ferner eine Umfangsnut 50 für einen Eingriff mit den Führungsarmen 110, 111.

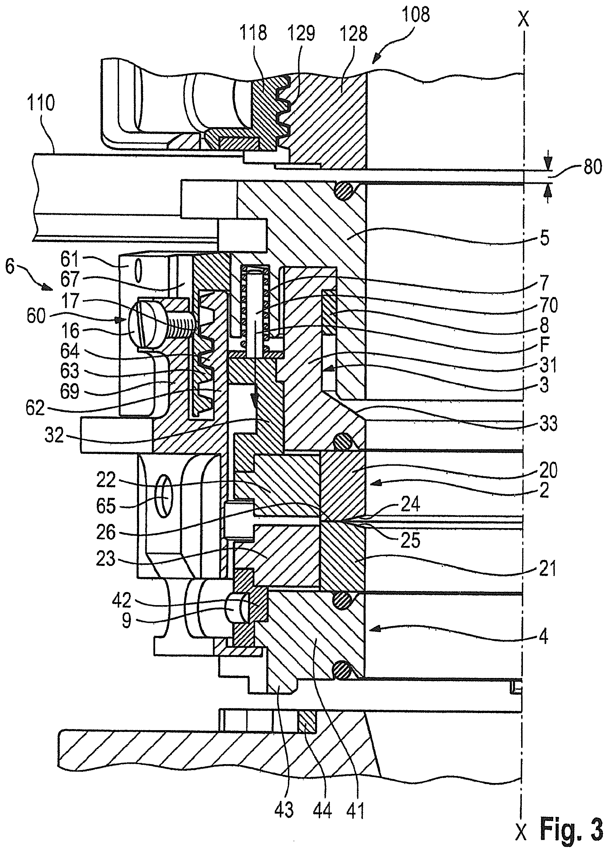

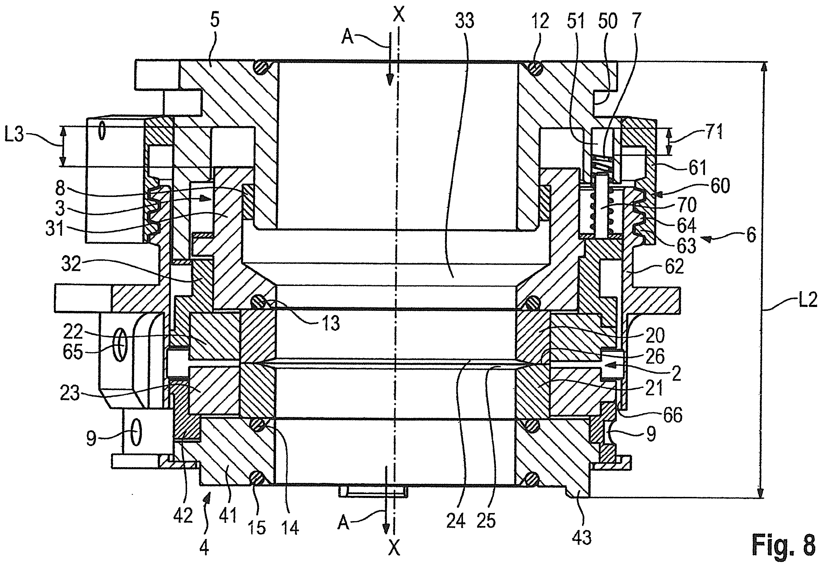

Der erfindungsgemäße vormontierte Wechseleinsatz 1 umfasst, wie insbesondere aus den Fig. 3 und 8 ersichtlich ist, eine Gleitringdichtungsanordnung 2 mit einem stationären Gleitring 20 und einem rotierenden Gleitring 21. Zwischen den beiden Gleitringen ist ein Dichtspalt 26 ausgebildet. Der stationäre Gleitring 20 ist von einer ersten Bandage 22 umschlossen und der rotierende Gleitring 21 ist von einer zweiten Bandage 23 umschlossen.

Am stationären Gleitring 20 ist ferner an dessen innerer Umfangsseite eine erste Fase 24 vorgesehen und am rotierenden Gleitring 21 in spiegelbildlicher Weise zum Dichtspalt eine zweite Fase 25 vorgesehen. Die beiden Fasen 24, 25 verlaufen in Radialrichtung des Wechseleinsatzes und reichen bis zur Mitte der Gleitringe 20, 21.

Der Wechseleinsatz 1 umfasst ferner einen ersten Gleitringträger 3, welcher den stationären Gleitring 20 hält und einen zweiten Gleitringträger 4, welcher den rotierenden Gleitring 21 hält. Der erste Gleitringträger 3 ist zweiteilig aus einem ersten Trägerteil 31 und einem zweiten Trägerteil 32 ausgebildet. Am inneren Umfang des ersten Gleitringträgers 3 ist ferner eine Schulter 33 vorgesehen.

Der zweite Gleitringträger 4 ist ebenfalls zweiteilig mit einem ersten Trägerteil 41 und einem zweiten Trägerteil ausgebildet, welches ein Verstellring 42 ist, und weist ferner mehrere in Axialrichtung X-X des Wechseleinsatzes 1 verlaufende Vorsprünge 43 auf. Die Vorsprünge 43 dienen zur Übertragung eines Drehmoments vom angetriebenen, rotierenden Spülrohr 103 über den zweiten Adapter 109 und den zweiten Gleitringträger 4 auf den rotierenden Gleitring 21.

Weiterhin umfasst der vormontierte Wechseleinsatz 1 einen Verstellmechanismus 6 mit einer Schraubverbindung 60. Der Verstellmechanismus 6 umfasst eine Außenhülse 61 mit einem Innengewinde 63 und eine Innenhülse 62 mit einem Außengewinde 64. Dabei greifen das Innengewinde 63 und das Außengewinde 64 ineinander ein und bei einer Relativverdrehung zwischen der Außenhülse 61 und der Innenhülse 62 erfolgt eine Längung des vormontierten Wechseleinsatzes in Axialrichtung X-X des Verstellmechanismus 6. In Fig. 2 ist dabei eine Ausgangslänge L1 des vormontierten Wechseleinsatzes 1 in Axialrichtung gezeigt. Fig. 8 zeigt die vollständig ausgefahrene Axiallänge L2, welche um eine Länge L3 länger als die Ausgangslänge L1 ist.

Die Innenhülse 62 überdeckt dabei in Radialrichtung die Gleitringdichtung 2 und stellt eine Führungsfläche 66 für den rotierenden Gleitring 21 an einer radialen Außenseite der Bandage 23 bereit. Die Innenhülse 62 hält ferner auch den zweiten Gleitringträger 4 über den Verstellring 42 des zweiten Gleitringträgers 4.

Weiterhin umfasst der erfindungsgemäße Wechseleinsatz 1 mehrere Federelemente 7, welche zwischen dem Anschlussbauteil 5 für einen Anschluss an das stationäre Spülrohr 102 und dem ersten Gleitringträger 3 angeordnet sind. Jedes Federelement 7 ist um einen Stift 70 zur Führung und Positionierung der Federelemente angeordnet. Die Federelemente 7 sind in Taschen 51 im Anschlussbauteil 5 angeordnet.

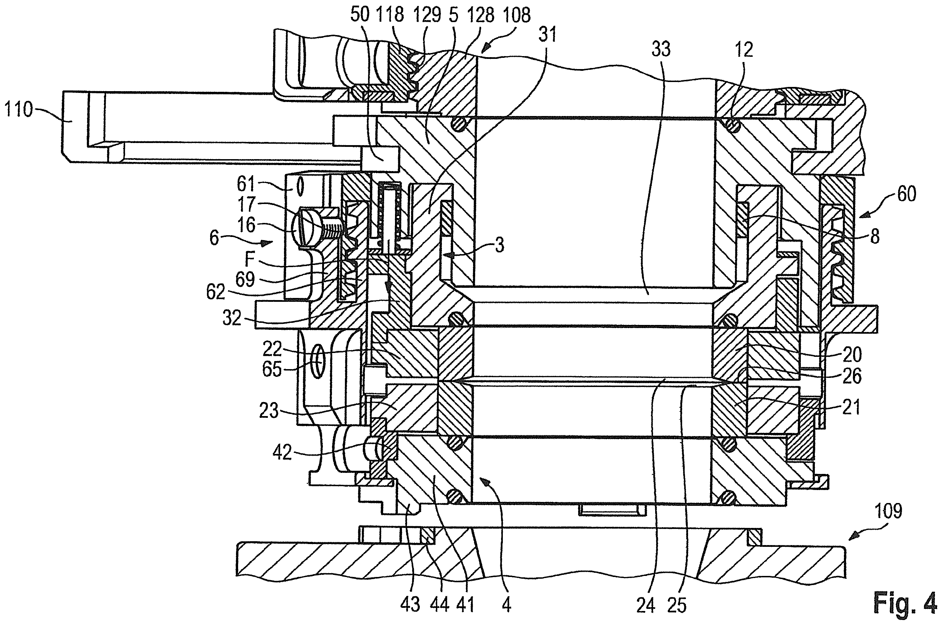

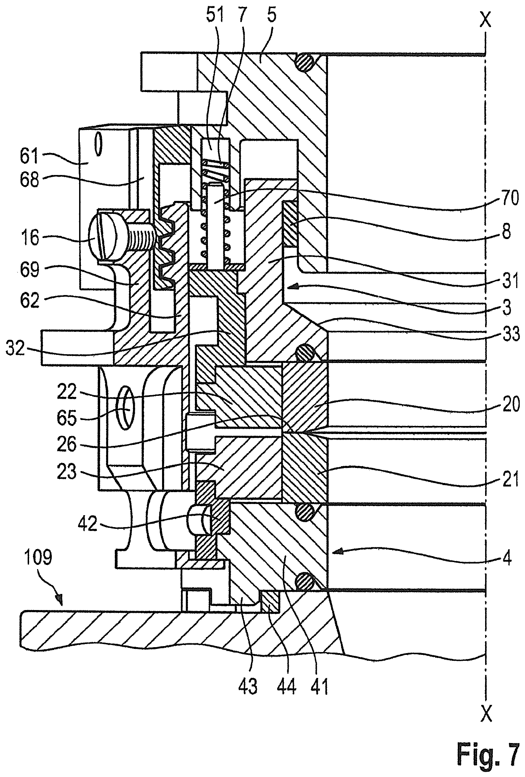

Die Federelemente 7 stellen sicher, dass im nicht endmontierten Zustand des Wechseleinsatzes (Fig. 2, 3 und 4) eine Kraft F über den ersten Gleitringträger 3 auf den stationären Gleitring 20 ausgeübt wird, so dass der stationäre Gleitring 20 sicher am rotierenden Gleitring 21 anliegt und die Gleitflächen sich berühren (vgl. Fig. 4). Im endmontierten Zustand, welcher in den Fig. 7 und 8 dargestellt ist, üben die Federelemente 7 jedoch keinerlei Federkraft auf die Gleitringdichtung 2 aus. Dies wird z.B. durch entsprechende Auslegung einer Länge der Federn 7 erreicht, so dass im endmontierten Zustand des Wechseleinsatzes 1 in der Bohrspüleinrichtung 100 ein Federabstand 71 zwischen einem Ende der Federelemente 7 und dem Anschlussbauteil 5 vorhanden ist, wie in Fig. 8 gezeigt.

Die Federelemente 7 bilden somit eine Transportsicherung, welche vor einer endgültigen Endmontage des Wechseleinsatzes 1 eine ständige Vorspannung in Axialrichtung X-X auf die Gleitringdichtung ausübt.

Weiter ist zwischen dem Anschlussbauteil 5 und dem ersten Gleitringträger 3 ein Dichtelement 8 angeordnet. Weiterhin umfasst der Wechseleinsatz 1 ein erstes, zweites, drittes und viertes Nebendichtelement 12, 13, 14, 15. Das erste Nebendichtelement 12 dichtet dabei zwischen dem Anschlussbauteil 5 und dem stationären Spülrohr 102 ab, das zweite Nebendichtelement 13 dichtet zwischen dem ersten Gleitringträger 3 und dem stationären Gleitring 20 ab, das dritte Nebendichtelement 14 dichtet zwischen dem rotierenden Gleitring 21 und dem zweiten Gleitringträger 4 ab und das vierte Nebendichtelement 15 dichtet zwischen dem zweiten Gleitringträger 4 und dem zweiten Adapter 109 zum rotierenden Spülrohr 103 ab.

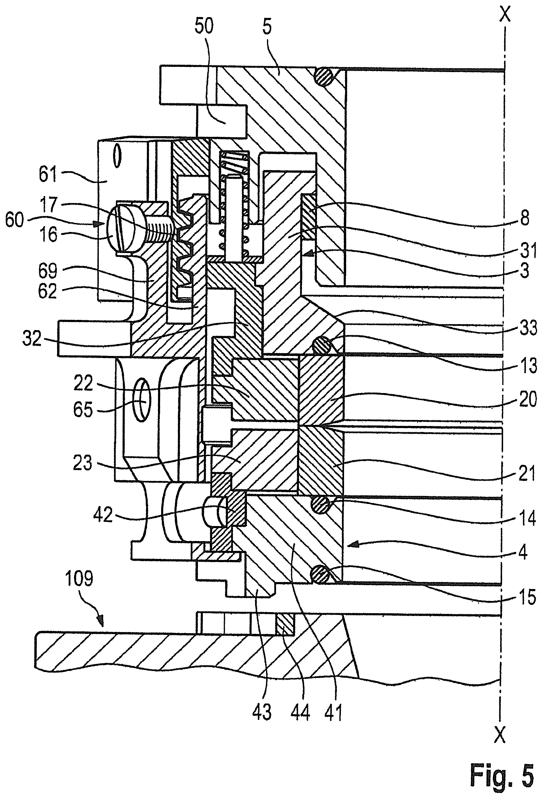

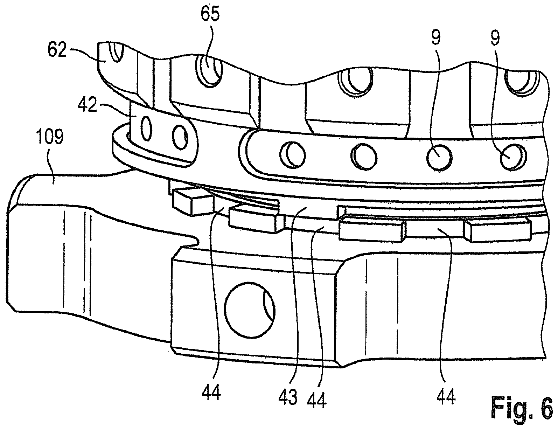

Der Verstellring 42 des zweiten Gleitringträgers, welcher von außerhalb des vormontierten Wechseleinsatzes 1 mittels eines Werkzeugs an Öffnungen 9 verdrehbar ist, ermöglicht eine Ausrichtung des zweiten Gleitringträgers 4 in Umfangsrichtung. Dies ist notwendig, damit eine Drehmomentübertragung über die in Axialrichtung X-X vorstehenden Vorsprünge 43 vom zweiten Adapter 109 über den zweiten Gleitringträger 4 auf den rotierenden Gleitring 21 möglich ist. Dieser Vorgang ist in den Fig. 5 und 6 ersichtlich.

Der zweite Adapter 109 weist entsprechend den Vorsprüngen 43 gebildete Ausnehmungen 44 auf, so dass eine formschlüssige Verbindung zwischen dem zweiten Adapter 109 und dem Verstellring 42 möglich ist.

Zur Fixierung einer Relativposition des Verstellmechanismus 6 zwischen der Außenhülse 61 und der Innenhülse 62 ist weiterhin eine Verdrehsicherung 16 vorgesehen. Die Verdrehsicherung 16 dieses Ausführungsbeispiels ist ein Schraubbolzen, welcher eine Relativposition zwischen der Außenhülse 61 und der Innenhülse 62 fixiert. Der Schraubbolzen umfasst dabei eine federvorgespannte Kugel, welche in der noch nicht endmontierten Position in eine erste Ausnehmung 67 am Außenumfang der Außenhülse 61 eingerastet ist (Fig. 3). Die Verdrehsicherung ist dabei an einem mit der Innenhülse verbundenen Arm 69 angeordnet, so dass die Außenhülse 61 zwischen dem Arm 69 und der Innenhülse angeordnet ist (vgl. Fig. 3 und 4). In der vollständig endmontierten Position (Fig. 7) ist die Kugel in einer zweiten Ausnehmung 68 an der Aussenhülse 61 eingerastet, welche als Indikator für das Erreichen der Endposition des in Axialrichtung verlängerten Wechseleinsatzes dient. Die beiden Ausnehmungen 67, 68 sind um ca. eine Viertelumdrehung zwischen Innenhülse und Außenhülse am Umfang der Außenhülse 61 angeordnet. Durch das Einrasten der Kugel in den Ausnehmungen 67, 68 hat ein Monteur jeweils während des Vormontieren des Wechseleinsatzes einen Indikator für die richtige Position der Bauteile Innenhülse und Außenhülse zueinander als auch in der endmontierten Position durch Einrasten in der zweiten Ausnehmung 68. Damit ist eine sichere Montage auch unter erschwertesten Umweltbedingungen möglich.

Da erfindungsgemäß der Wechseleinsatz vormontiert ist, kann der Wechseleinsatz problemlos in einer Werkstatt komplett vormontiert werden. Hierbei können auch auf einfache Weise sämtliche Nebendichtelemente 12, 13, 14, 15 ersetzt werden. Die Transportsicherung mittels der Federelemente 7 stellt dabei sicher, dass während des Transports und des Einbaues bis kurz vor Erreichen einer Endeinbauposition immer eine Vorspannung auf die Gleitringe 20, 21 ausgeübt wird, so dass die Gleitflächen der Gleitringe eng aneinander anliegen und eine Beschädigung der Gleitflächen vermieden werden kann. Erfindungsgemäß kann somit auf einfache und schnelle Weise ein kompletter Wechsel des Wechseleinsatzes mit Gleitringdichtungsanordnung ermöglicht werden. Damit können bei jedem Austausch des Wechseleinsatzes neue Nebendichtelemente verwendet werden, wodurch sich ein reduzierter Wartungsbedarf und eine jeweils längere Einsatzdauer des Wechseleinsatzes ergibt. Bei einem neuen Wechseleinsatz können auch die Federelemente 7 jeweils ausgetauscht werden, falls notwendig. Da die Federelemente 7 in den Taschen 51 angeordnet sind, sind sie jedoch sehr gut gegenüber dem gepumpten Medium geschützt, so dass ein Wechsel der Federelemente 7 häufig nicht notwendig ist.

Der Wechselvorgang wird nachfolgend im Detail beschrieben. Nachdem der auszuwechselnde Wechseleinsatz aus der Bohrspüleinrichtung 100 entfernt wurde, wird, wie in Fig. 2 angedeutet, ein neuer, vormontierter Wechseleinsatz 1 in die Bohrspüleinrichtung 100 eingeschoben. Hierbei wird der neue, vormontierte Wechseleinsatz 1 an der Umfangsnut 50 und den Führungselementen 10, 11 auf die beiden Führungsarme 110, 111 aufgeschoben, so dass nach einem kurzen Aufschiebeweg das komplette Gewicht des Wechseleinsatzes 1 durch die Führungsarme 110, 111 getragen wird. Hierdurch wird eine Montage des Wechseleinsatzes, welcher üblicherweise auf einer gewissen Höhe im Bohrturm 101 erfolgt, und auch bei sehr extremen Witterungsbedingungen ausführbar sein muss, deutlich erleichtert. Ein Monteur muss nun den vormontierten Wechseleinsatz 1 einfach nur noch entlang der Führungsarme 110, 111 in die Montageposition schieben. Diese eingeschobene Position ist in Fig. 3 dargestellt. Dabei ist ein erster Abstand 80 zwischen einer Stirnfläche des Anschlussbauteils 5 und einer Stirnfläche des ersten Adapters 108, welcher am stationären Spülrohr 102 angeordnet ist, vorhanden (vgl. Fig. 3).

In einem nächsten Schritt wird dieser erste Abstand 80 eliminiert, indem der erste Adapter 108 in Axialrichtung X-X des Wechseleinsatzes verlängert wird (Fig. 3). Hierbei umfasst der erste Adapter 108 einen Außenring 118 und einen Innenring 128, zwischen welchen ein Gewinde 129 vorhanden ist, so dass durch Drehen wenigstens eines der Ringe der Innenring 128 mit dem Anschlussbauteil 5 in Kontakt kommt. Diese Position ist in Fig. 4 dargestellt. Dadurch ist eine Verbindung zwischen dem vormontierten Wechseleinsatz 1 und dem stationären Spülrohr 102 über den ersten Adapter 108 vorhanden. Da die Verbindung statisch ist, reicht zur Abdichtung das erste Nebendichtelement 12. Die Axiallänge L1 des vormontierten Wechseleinsatzes wurde noch nicht verändert.

In einem nächsten Schritt wird nun eine Verbindung zwischen dem vormontierten Wechseleinsatz 1 und dem rotierenden Spülrohr 103 ausgeführt. Hierzu wird der Verstellmechanismus 6 betätigt, in dem die Innenhülse 62 relativ zur Außenhülse 61 gedreht wird. Die Innenhülse 62 weist dabei auch einen zur Außenseite freiliegenden Bereich auf, in welchem mehrere Ausnehmungen 65 zum Ansetzen eines Werkzeugs vorhanden sind. Die Innenhülse 62 wird dabei relativ zur Außenhülse 61 solange gedreht, bis die in Fig. 5 gezeigte Position erreicht ist. In dieser Position ist noch keine endgültige Verbindung zwischen dem vormontierten Wechseleinsatz 1 und dem zweiten Adapter 109 am rotierenden Spülrohr 103 ausgebildet, sondern es muss noch eine Ausrichtung des Drehmomentübertragungsmechanismus zwischen dem zweiten Adapter 109 und dem zweiten Gleitringträger 4 erfolgen. Hierzu wird der Verstellring 42 in Umfangsrichtung verdreht, was ebenfalls mittels eines von außen an den Verstellring 42 ansetzbaren Werkzeugs ermöglicht wird. Die Ausrichtung ist dabei derart, dass die Vorsprünge 43 des zweiten Gleitringträgers 4 über den entsprechenden Ausnehmungen 44 des zweiten Adapters 109 angeordnet sind, wie in Fig. 6 gezeigt.

Nachdem die Ausrichtung erfolgt ist, wird die Innenhülse 62 des Verstellmechanismus 6 weiter relativ zur Außenhülse 61 verdreht, so dass eine weitere Längung des Wechseleinsatzes 1 in Axialrichtung X-X erfolgt, bis die verbindende Endposition, welche in Fig. 7 und 8 dargestellt ist, erreicht ist (Axiallänge L2).

Fig. 8 zeigt ebenfalls den vormontierten Wechseleinsatz in der verbindenden Endposition, wobei aus Übersichtlichkeitsgründen der erste und zweite Adapter 108, 109 des stationären und rotierenden Spülrohrs nicht dargestellt sind.

Durch die axiale Längung des Wechseleinsatzes 1 können sich die Federelemente 7 vollständig entspannen, so dass der in Fig. 8 eingezeichnete Federabstand 71 zwischen dem freien Ende des Federelements 7 und dem Anschlussbauteil 5 vorhanden ist. Im Betrieb wird dann der Druck auf die Gleitringe über die Schulter 33 aufgebaut. Die Federelemente können auch so ausgelegt sein, dass kein Federabstand zum Anschlussbauteil 5 vorhanden ist, jedoch keine Federkraft mehr zwischen Anschlussbauteil 5 und erstem Gleitringträger 4 wirkt.

Die Federelemente 7 sind dabei in entsprechend ausgebildeten Taschen 51 im Anschlussbauteil 5 angeordnet.

Als letzter Schritt wird dann die Verdrehsicherung 16 für eine Fixierung einer Relativposition zwischen der Außenhülse 61 und der Innenhülse 62 des Verstellmechanismus 6 aktiviert. Hierbei rastet die Kugel der Verdrehsicherung in der zweiten Ausnehmung 68 ein. Damit hat der Monteur einen Indikator, dass der Wechseleinsatz auf die richtige Axiallänge L2 verlängert wurde. Anschließend ist die Bohrspüleinrichtung 100 wieder einsatzbereit.

Im Betrieb wird dann ein Druck über die Schulter 33 am ersten Gleitringträger 3 auf die Gleitringe ausgeübt, so dass eine sichere Abdichtung am Dichtspalt 26 möglich ist. Je nach Anwendungsfall kann dabei das gewünschte Druckniveau durch Änderung der Länge der Fasen 24, 25 in Radialrichtung der Gleitringe ausgelegt werden. In der endmontierten Position weist der Wechseleinsatz 1 somit eine um die Länge L3 verlängerte Axiallänge, ausgehend von der Axiallänge L1 (Fig. 2) zur Axiallänge L2 (Fig. 8) auf.

Durch die erfindungsgemäße Idee des Vorsehens eines vormontierten Wechseleinsatzes mit einer Gleitringdichtungsanordnung 2 kann somit ein schneller und sicherer Wechsel, auch bei widrigen Umgebungsbedingungen, erreicht werden. Ferner kann der Wechseleinsatz 1 die Verwendung von Gleitringen als Dichtung bei einer Bohrspüleinrichtung 100 ermöglichen, so dass im Vergleich mit dem Stand der Technik eine deutlich längere Lebensdauer der Dichtung zwischen rotierendem und stationärem Spülrohr erreicht wird. Die Handhabung des Wechseleinsatzes kann dabei von einem einzigen Monteur ausgeführt werden.

Durch das Vorsehen der Umfangsnut 50 am Anschlussbauteil 5 ist auch eine Fehlmontage praktisch ausgeschlossen. Um den vormontierten Wechseleinsatz 1 in die Endposition zu bringen, müssen lediglich zwei Gewindeverstellmechanismen verstellt werden, einer am ersten Adapter 108 am stationären Spülrohr 102, und ein zweiter am Wechseleinsatz 1 (Verstellmechanismus 6). Dieser Vorgang kann auch unter schwersten Umweltbedingungen ermöglicht werden. Weiterhin kann sicher eine Beschädigung der Gleitringe während des Wechselvorgangs vermieden werden, da die die Transportsicherung bildenden Federelemente 7 eine Vorspannung bis kurz vor Erreichen der Endmontageposition auf die Gleitringe ausüben. Auch ist kein Hantieren mit einzelnen Gleitringen notwendig, was im Stand der Technik häufig zu schwerwiegenden Beschädigungen der Gleitringe mit entsprechend reduzierter Lebensdauer der derart montierten Gleitringe führt.

### Bezugszeichenliste

- 1: Wechseleinsatz
- 2: Gleitringdichtungsanordnung
- 3: erster Gleitringträger
- 4: zweiter Gleitringträger
- 5: Anschlussbauteil
- 6: Verstellmechanismus
- 7: Federelement
- 8: Dichtelement
- 9: Öffnung
- 10, 11: Führungselemente
- 12-15: Nebendichtelemente
- 16: Verdrehsicherung
- 17: vorgespanntes Rastelement
- 20: stationärer Gleitring
- 21: rotierender Gleitring
- 22: erste Bandage
- 23: zweite Bandage
- 24: erste Fase
- 25: zweite Fase
- 26: Dichtspalt
- 31: erstes Trägerteil
- 32: zweites Trägerteil
- 33: Schulter
- 41: erstes Trägerteil
- 42: Verstellring
- 43: Vorsprung
- 44: Ausnehmung
- 50: Umfangsnut
- 51: Tasche
- 60: Schraubverbindung
- 61: Außenhülse
- 62: Innenhülse
- 63: Innengewinde
- 64: Außengewinde
- 65: Ausnehmung
- 66: Führungsfläche
- 67: erste Ausnehmung
- 68: zweite Ausnehmung
- 69: Arm
- 70: Stift zur Positionierung
- 71: Federabstand
- 80: erster Abstand
- 100: Bohrspüleinrichtung
- 101: Bohrturm
- 102: stationäres Spülrohr
- 103: rotierendes Spülrohr
- 104: Bohrkopf
- 105: Pumpe
- 106: Bohrloch
- 107: Trenneinrichtung
- 108: erster Adapter
- 109: zweiter Adapter
- 110, 111: Führungsarme
- 112: Zwischenraum
- 118: Außenring
- 128: Innenring
- 129: Gewinde

## Patentansprüche

1. Vormontierter Wechseleinsatz einer Bohrspüleinrichtung zum Verbinden eines stationären Spülrohrs mit einem rotierenden Spülrohr eines Bohrlochs, umfassend:
- eine Gleitringdichtungsanordnung (2) mit einem stationären Gleitring (20) und einem rotierenden Gleitring (21),
- einen ersten Gleitringträger (3), an welchem der stationäre Gleitring (20) angeordnet ist,
- einen zweiten Gleitringträger (4), an welchem der rotierende Gleitring (21) angeordnet ist,
- ein Anschlussbauteil (5), welches eingerichtet ist, den Wechseleinsatz an das stationäre Spülrohr anzubinden,
**gekennzeichnet durch**
- einen in Axialrichtung (X-X) wirkenden Verstellmechanismus (6) mit einer Schraubverbindung (60) zur Änderung einer Axiallänge (L1, L2) des Wechseleinsatzes,
- wobei die Schraubverbindung (60) mit dem zweiten Gleitringträger (4) verbunden ist, um in Axialrichtung (X-X) eine Verstellung des zweiten Gleitringträgers (4), der Gleitringdichtungsanordnung (2) und des ersten Gleitringträgers (3) relativ zum Anschlussbauteil (5) zu ermöglichen.

2. Wechseleinsatz nach Anspruch 1, **dadurch gekennzeichnet, dass** die Schraubverbindung (60) eine Außenhülse (61) mit einem Innengewinde (63) und eine Innenhülse (62) mit einem Außengewinde (64) umfasst.

3. Wechseleinsatz nach einem der vorhergehenden Ansprüche, **dadurch gekennzeichnet, dass** der zweite Gleitringträger (4) wenigstens einen in Axialrichtung (X-X) vorstehenden Vorsprung (43) für eine Drehmomentübertragung vom rotierenden Spülrohr auf den zweiten Gleitringträger (4) umfasst.

4. Wechseleinsatz nach Anspruch 3, **dadurch gekennzeichnet, dass** der zweite Gleitringträger (4) einen Ausrichtring (42) umfasst, um den zweiten Gleitringträger (4) in Umfangsrichtung auszurichten.

5. Wechseleinsatz nach einem der vorhergehenden Ansprüche, **dadurch gekennzeichnet, dass** das Anschlussbauteil (5) eine Umfangsnut (50) für einen formschlüssigen Eingriff mit dem stationären Spülrohr aufweist.

6. Wechseleinsatz nach einem der vorhergehenden Ansprüche, ferner umfassend eine Transportsicherung mit wenigstens einem Federelement (7), welches vor einer Endmontage des vormontierten Wechseleinsatzes eine Vorspannung auf die Gleitringdichtungsanordnung (2) ausübt und im endmontierten Zustand der Wechseleinrichtung keine Vorspannung mehr auf die Gleitringdichtung (2) ausübt.

7. Wechseleinsatz nach Anspruch 6, **dadurch gekennzeichnet, dass** die Transportsicherung zwischen dem Anschlussbauteil (5) und dem ersten Gleitringträger (3) angeordnet ist.

8. Wechseleinsatz nach einem der vorhergehenden Ansprüche, **dadurch gekennzeichnet, dass** der erste Gleitringträger (3) eine an dessen Innenumfang angeordnete Schulter (33) aufweist.

9. Wechseleinsatz nach einem der vorhergehenden Ansprüche, **dadurch gekennzeichnet, dass** der stationäre Gleitring (20) und/oder der rotierende Gleitring (21) an einem inneren Umfang eine Fase (24, 25) aufweist.

10. Wechseleinsatz nach einem der vorhergehenden Ansprüche, **dadurch gekennzeichnet, dass** die Innenhülse (62) des Verstellmechanismus (6) an einer Innenseite eine Führungsfläche (66) für den rotierenden Gleitring (21) aufweist.

11. Wechseleinsatz nach einem der vorhergehenden Ansprüche, **dadurch gekennzeichnet, dass** der Verstellmechanismus (6) eine Verdrehsicherung (16) umfasst, um eine Relativposition zwischen der Außenhülse (61) und der Innenhülse (62) zu fixieren.

12. Wechseleinsatz nach Anspruch 11, **dadurch gekennzeichnet, dass** die Verdrehsicherung (16) einen Schraubbolzen mit einem an einer Spitze des Schraubbolzens federbelasteten Rastelement (17) umfasst, welches in einer vormontierten Position in eine erste Ausnehmung (67) an der Aussenhülse (61) einrastet und in einer endmontierten Position in eine zweite Ausnehmung (68) an der Aussenhülse (61) einrastet.

13. Wechseleinsatz nach Anspruch 11 oder 12, **dadurch gekennzeichnet, dass** die Verdrehsicherung (16) an einem mit der Innenhülse (62) verbundenen Arm (69) angeordnet ist, wobei die Außenhülse (61) zwischen dem Arm (69) und der Innenhülse (62) angeordnet ist.

14. Wechseleinsatz nach einem der Ansprüche 2 bis 13, **dadurch gekennzeichnet, dass** die Innenhülse (62) eine Länge in Axialrichtung (X-X) aufweist, welche größer als eine Länge in Axialrichtung (X-X) der Außenhülse (61) ist.

15. Wechseleinsatz nach Anspruch 14, **dadurch gekennzeichnet, dass** die Innenhülse (62) einen in Axialrichtung (X-X) verlängerten Bereich aufweist, welcher zum Ansetzen eines Werkzeuges zur Verstellung der Schraubverbindung (60) eingerichtet ist.

## Claims

1. A pre-mounted exchange insert of a drill wash device for connecting a stationary washpipe to a rotating washpipe of a drill hole, comprising:
- a mechanical seal assembly (2) with a stationary seal ring (20) and a rotating seal ring (21),
- a first seal ring carrier (3) on which the stationary seal ring (20) is arranged,
- a second seal ring carrier (4) on which the rotating seal ring (21) is arranged,
- a connection component (5) which is configured to connect the exchange insert to the stationary washpipe,
**characterized by**
- an adjusting mechanism (6) operative in axial direction (X-X) with a screw connection (60) for changing an axial length (L1, L2) of the exchange insert,
- wherein the screw connection (60) is connected to the second seal ring carrier (4) to permit, in axial direction (X-X), an adjustment of the second seal ring carrier (4), the mechanical seal assembly (2) and the first seal ring carrier (3) relative to the connection component (5).

2. The exchange insert according to claim 1, **characterized in that** the screw connection (60) comprises an external sleeve (61) with an internal thread (63) and an internal sleeve (62) with an external thread (64).

3. The exchange insert according to any one of the preceding claims, **characterized in that** the second seal ring carrier (4) comprises at least one projection (43) protruding in axial direction (X-X) for torque transmission from the rotating washpipe to the second seal ring carrier (4).

4. The exchange insert according to claim 3, **characterized in that** the second seal ring carrier (4) comprises an aligning ring (42) to align the second seal ring carrier (4) in circumferential direction.

5. The exchange insert according to any one of the preceding claims, **characterized in that** the connection component (5) comprises a circumferential groove (50) for a form-fit engagement with the stationary washpipe.

6. The exchange insert according to any one of the preceding claims, further comprising a transportation lock with at least one spring element (7) which before a final assembly of the pre-mounted exchange insert exerts a preload on the mechanical seal assembly (2) and no longer exerts a preload on the mechanical seal (2) in the end-mounted state of the exchange insert.

7. The exchange insert according to claim 6, **characterized in that** the transportation lock is arranged between the connection component (5) and the first seal ring carrier (3).

8. The exchange insert according to any one of the preceding claims, **characterized in that** the first seal ring carrier (3) comprises a shoulder (33) arranged on the inner circumference thereof.

9. The exchange insert according to any one of the preceding claims, **characterized in that** the stationary seal ring (20) and/or the rotating seal ring (21) comprises a bevel (24, 25) on an inner circumference.

10. The exchange insert according to any one of the preceding claims, **characterized in that** on an inside the inner sleeve (62) of the adjusting mechanism (6) comprises a guide surface (66) for the rotating seal ring (21).

11. The exchange insert according to any one of the preceding claims, **characterized in that** the adjusting mechanism (6) comprises an anti-rotation device (16) to fix a relative position between the external sleeve (61) and the internal sleeve (62).

12. The exchange insert according to claim 11, **characterized in that** the anti-rotation device (16) comprises a threaded bolt with a locking element (17) which is springloaded on a tip of the threaded bolt and which in a pre-mounted position locks into a first recess (67) on the external sleeve (61) and in an end-mounted position locks into a second recess (68) on the external sleeve (61).

13. The exchange insert according to claim 11 or 12, **characterized in that** the anti-rotation device (16) is arranged on an arm (69) which is connected to the internal sleeve (62), wherein the external sleeve (61) is arranged between the arm (69) and the internal sleeve (62).

14. The exchange insert according to any one of claims 2 to 13, **characterized in that** the internal sleeve (61) has a length in axial direction (X-X) that is greater than a length in axial direction (X-X) of the external sleeve (61).

15. The exchange insert according to claim 14, **characterized in that** the internal sleeve (62) comprises a portion which is elongated in axial direction (X-X) and which is configured for the attachment of a tool for adjusting the screw connection (60).

## Revendications

1. Pièce intégrée remplaçable et préassemblée, équipant un dispositif de rinçage de puits forés et conçue pour relier un tube stationnaire de rinçage à un tube rotatif de rinçage d'un puits foré, comprenant :
- un ensemble d'étanchement (2) à anneaux glissants, incluant un anneau glissant (20) fixe et un anneau glissant (21) rotatif,
- un premier support (3), sur lequel ledit anneau glissant (20) fixe est disposé,
- un second support (4), sur lequel ledit anneau glissant (21) rotatif est disposé,
- un élément structurel de raccordement (5), agencé pour rattacher ladite pièce intégrée remplaçable audit tube stationnaire de rinçage,
**caractérisée par**
- un mécanisme de réglage (6) agissant dans la direction axiale (X-X) et équipé d'une liaison vissée (60), en vue de modifier une longueur axiale (L1, L2) de la pièce intégrée remplaçable,
- ladite liaison vissée (60) étant reliée au second support (4) d'anneau glissant, afin de permettre un réglage dudit second support (4) d'anneau glissant, de l'ensemble d'étanchement (2) à anneaux glissants et du premier support (3) d'anneau glissant, dans la direction axiale (X-X), par rapport à l'élément structurel de raccordement (5).

2. Pièce intégrée remplaçable selon la revendication 1, **caractérisée par le fait que** la liaison vissée (60) inclut une douille extérieure (61) à filetage intérieur (63) et une douille intérieure (62) à filetage extérieur (64).

3. Pièce intégrée remplaçable selon l'une des revendications précédentes, **caractérisée par le fait que** le second support (4) d'anneau glissant est pourvu d'au moins une saillie (43) dépassant dans la direction axiale (X-X), en vue de transmettre des couples de rotation audit second support (4) d'anneau glissant à partir du tube rotatif de rinçage.

4. Pièce intégrée remplaçable selon la revendication 3, **caractérisée par le fait que** le second support (4) d'anneau glissant est doté d'une bague d'orientation (42), en vue d'orienter ledit second support (4) d'anneau glissant dans la direction périphérique.

5. Pièce intégrée remplaçable selon l'une des revendications précédentes, **caractérisée par le fait que** l'élément structurel de raccordement (5) est muni d'une rainure circonférentielle (50), en vue d'une venue en prise par complémentarité de formes avec le tube stationnaire de rinçage.

6. Pièce intégrée remplaçable selon l'une des revendications précédentes, comprenant, par ailleurs, un verrou de transport équipé d'au moins un élément élastique (7) qui impose une précontrainte à l'ensemble d'étanchement (2) à anneaux glissants, avant un montage définitif de ladite pièce intégrée remplaçable préassemblée, et n'impose plus aucune précontrainte au système d'étanchement (2) à anneaux glissants à l'état de montage définitif du dispositif remplaçable.

7. Pièce intégrée remplaçable selon la revendication 6, **caractérisée par le fait que** le verrou de transport est interposé entre l'élément structurel de raccordement (5) et le premier support (3) d'anneau glissant.

8. Pièce intégrée remplaçable selon l'une des revendications précédentes, **caractérisée par le fait que** le premier support (3) d'anneau glissant présente un épaulement (33) situé sur le pourtour intérieur dudit support.

9. Pièce intégrée remplaçable selon l'une des revendications précédentes, **caractérisée par le fait que** l'anneau glissant (20) fixe, et/ou l'anneau glissant (21) rotatif, comporte(nt) un chanfrein (24, 25) sur un pourtour intérieur.

10. Pièce intégrée remplaçable selon l'une des revendications précédentes, **caractérisée par le fait que** la douille intérieure (62) du mécanisme de réglage (6) est pourvue, sur une face intérieure, d'une surface de guidage (66) affectée à l'anneau glissant (21) rotatif.

11. Pièce intégrée remplaçable selon l'une des revendications précédentes, **caractérisée par le fait que** le mécanisme de réglage (6) inclut une sécurité antirotation (16), afin de consigner fermement un emplacement relatif entre la douille extérieure (61) et la douille intérieure (62).

12. Pièce intégrée remplaçable selon la revendication 11, **caractérisée par le fait que** la sécurité antirotation (16) comporte un boulon muni d'un élément encliquetable (17) qui est chargé élastiquement au niveau d'une pointe dudit boulon, se crante dans un premier évidement (67) situé sur la douille extérieure (61), en un emplacement de montage préalable, et se crante dans un second évidement (68) situé sur ladite douille extérieure (61), en un emplacement de montage définitif.

13. Pièce intégrée remplaçable selon la revendication 11 ou 12, **caractérisée par le fait que** la sécurité antirotation (16) est implantée sur un bras (69) relié à la douille intérieure (62), la douille extérieure (61) étant interposée entre ledit bras (69) et ladite douille intérieure (62).

14. Pièce intégrée remplaçable selon l'une des revendications 2 à 13, **caractérisée par le fait que** la douille intérieure (62) présente, dans la direction axiale (X-X), une longueur supérieure à une longueur dans la direction axiale (X-X) de la douille extérieure (61).

15. Pièce intégrée remplaçable selon la revendication 14, **caractérisée par le fait que** la douille intérieure (62) comporte une région prolongée dans la direction axiale (X-X) et agencée en vue de l'engagement d'un outil dévolu au réglage de la liaison vissée (60).
